# FASCICULE DE BREVET EUROPEEN

(11) **EP 1 893 019 B1**
(45) Date de publication et mention de la délivrance du brevet: **17.02.2010**
(21) Numéro de dépôt: 06755479.0
(22) Date de dépôt: 10.05.2006
(51) Int. Cl.: A01N 43/653

(54) **FORMULATION PHYTOSANITAIRE COMPRENANT UN COMPOSE ACTIF CHOISI PARMI LES AZOLES ET UN SOLVANT, ET COMPOSITION SOLVANTE UTILE**
PFLANZENSCHUTZMITTELZUSAMMENSETZUNG, DIE EINEN WIRKSTOFF AUS DER REIHE DER AZOLE UND EIN LÖSUNGSMITTEL ENTHÄLT, SOWIE NÜTZLICHE LÖSUNGSMITTELZUSAMMENSETZUNG
PLANT PROTECTION COMPOSITION INCLUDING AN ACTIVE COMPOUND SELECTED FROM AZOLES AND A SOLVENT, AND USEFUL SOLVENT COMPOSITION

(30) Priorité: 13.05.2005 FR 0504847
(43) Date de publication de la demande: 05.03.2008
(73) Titulaire: RHODIA CHIMIE, 93300 Aubervilliers (FR)
(72) Inventeur: BRAMATI, Valerio, I-20020 Arese (IT)
(74) Mandataire: Boittiaux, Vincent
(86) Numéro de dépôt international: PCT/FR2006/001039
(87) Numéro de publication internationale: WO 2006/120340

(56) Documents cités:
- WO-A-95/13702

## Description

La présente invention a pour objet une formulation phytosanitaire concentrée comprenant un composé actif choisi parmi les azoles, de préférence les triazoles, par exemple le tebuconazole. La composition comprend au moins un solvant. Elle est stable, et présente une facilité d'utilisation pour l'exploitant agricole. La présente invention a également pour objet une composition solvante, utile et préférée notamment pour la mise en oeuvre de la formulation phytosanitaire.

L'agriculture utilise de nombreuses matières actives telles que des fertilisants ou des pesticides, par exemple des insecticides, herbicides ou fongicides. On parle de produits phytosanitaires actifs (ou de matière active). Les produits phytosanitaires actifs sont généralement produits sous forme pure ou très concentrée. Ils doivent être utilisés sur les exploitations agricoles à de faibles concentrations. A cette fin, ils sont généralement formulés avec d'autres ingrédients afin de permettre une dilution en poids aisée par l'exploitant agricole. On parle de formulations phytosanitaires. La dilution opérée par l'exploitant agricole est généralement réalisée par mélange de la formulation phytosanitaire avec de l'eau.

Ainsi les formulations phytosanitaires doivent permettent une dilution en poids aisée par l'exploitant agricole, afin d'obtenir un produit dans lequel le produit phytosanitaire est correctement dispersé, par exemple sous forme de solution, d'émulsion, de suspension, ou de suspo-émulsion. Les formulations phytosanitaires permettent ainsi le transport d'un produit phytosanitaire sous forme relativement concentrée, un conditionnement aisé et/ou une manipulation aisée pour l'utilisateur final. Différents types de formulations phytosanitaires peuvent être utilisés selon les différents produits phytosanitaires. On cite par exemple les concentrés émulsionnables (Emulsifiable Concentrates «EC»), les émulsions concentrées (Emulsion in water "EW"), les microémulsions ("ME"), les poudres mouillables (Wettable Powders «WP»), les granulés dispersables dans l'eau (Water Dispersible Granules, «WDG»). Les formulations qu'il est possible d'utiliser dépendent de la forme physique du produit phytosanitaire (par exemple solide ou liquide), et de ses propriétés physico-chimiques en présence d'autres composés comme l'eau ou les solvants.

Après dilution en poids par l'exploitant agricole, par exemple par mélange avec de l'eau, le produit phytosanitaire peut se trouver sous différentes formes physiques: solution, dispersion de particules solides, dispersion de gouttelettes du produit, gouttelettes de solvant dans lequel le produit est dissous... Les formulations phytosanitaires comprennent généralement des composés permettant d'obtenir ces formes physiques. Il peut par exemple s'agir de tensioactifs, de solvants, de supports minéraux, et/ou de dispersants. Bien souvent ces composés n'ont pas un caractère actif, mais un caractère d'intermédiaire d'aide à la formulation. On souhaite donc bien souvent en limiter la quantité afin de limiter les coûts et/ou une éventuelle nocivité pour l'environnement. Les formulations phytosanitaires peuvent notamment être sous forme liquide, ou sous forme solide.

Pour des raisons pratiques (par exemple pour des raisons de facilité de manipulation et/ou de transport), on peut préférer parfois utiliser des formulations phytosanitaires sous forme solide, et parfois utiliser des formulations sous forme liquide.

Afin de préparer des formulations phytosanitaires de produits phytosanitaires actifs solides, il est connu de solubiliser le produit dans un solvant. La formulation phytosanitaire comprend ainsi une solution du produit dans le solvant. La formulation peut être sous forme solide, par exemple sous forme de poudre mouillable (WP) où la solution imbibe un support inorganique, par exemple du kaolin et/ou de la silice. La formulation peut alternativement être sous forme liquide, par exemple sous forme de concentré émulsionnable (EC) présentant une seule phase liquide limpide comprenant le solvant et le produit en solution, pouvant former une émulsion par ajout d'eau, sans agitation ou avec une faible agitation. Elle peut aussi être ou sous forme d'une émulsion concentrée (EW), trouble, dont la phase dispersée dans l'eau comprend le solvant et le produit en solution dans le solvant. Elle peut aussi être forme d'une microémulsion (ME), limpide, dont la phase dispersée dans l'eau comprend le solvant et le produit en solution dans le solvant.

Les azoles, en particuliers les triazoles, plus particulièrement le tebuconazole, sont des produits phytosanitaires généralement solides souvent difficiles à formuler. Le tebuconazole est un fongicide particulièrement efficace, et d'utilisation répandue, pour la culture du soja notamment. Pour ces produits, il est difficile de réaliser des formulations concentrées, faciles à diluer pour l'exploitant agricole, stables, et sans inconvénients (avérés ou perçus) substantiels en matière de sécurité, de toxicité et/ou d'eco-toxicité.

Il est connu de mettre en oeuvre des formulations liquides dans lesquelles les azoles sont solubilisés dans un solvant ou mis en présence d'un solvant (parfois dénommé également inhibiteur de cristallisation). Toutefois il reste difficile de formuler les azoles, en particulier les triazoles, à des concentrations relativement élevées, avec une stabilité suffisante. En particulier il est nécessaire d'éviter l'apparition de cristaux en particulier à basse température et/ou lors de la dilution et/ou lors du stockage à température élevée de la composition diluée. Les cristaux peuvent avoir des effets négatifs, notamment boucher les filtres des dispositifs utiliser pour répandre la composition diluée, boucher les dispositifs de pulvérisation, diminuer l'activité globale de la formulation, créer des problèmes inutiles de filières de déchets pour éliminer les cristaux, et/ou provoquer une mauvaise répartition du produit actif sur le champ agricole.

Il existe un besoin pour de nouvelles formulations d'azoles, en particulier de triazoles.

L'invention a pour objet de répondre à ce besoin, et d'éviter au moins un des inconvénients mentionnés ci-dessus. A cet effet, l'invention propose une formulation phytosanitaire concentrée comprenant
a) un produit phytosanitaire actif choisi parmi les azoles, de préférence les triazoles,
b) au moins un solvant,
c) éventuellement au moins agent émulsifiant, de préférence un tensioactif, et
d) éventuellement de l'eau,
caractérisée en ce que le solvant comprend un dialkyl-alkyl phosphonate.

L'invention concerne également l'utilisation de la formulation concentrée (ou une méthode) pour préparer une composition diluée dans l'eau du produit phytosanitaire actif, par mélange d'au moins une part en poids de formulation concentrée avec au moins 10 parts d'eau, de préférence moins de 1000 parts. La composition diluée peut bien entendu comprendre d'autres produits phytosanitaires actifs, pouvant provenir d'autres formulations phytosanitaires, ainsi combinés dans la composition.

L'invention concerne également l'utilisation du solvant dans des formulations concentrées ou dans les compositions diluées.

L'invention concerne également une composition solvante particulièrement efficace et particulièrement utile pour la mise en oeuvre de la formulation phytosanitaire, et pouvant être également utilisée à d'autres fins. La composition solvante comprend un mélange de solvants. Elle comprend:
b1) de 20 à 60 %, de préférence de 25 à 40%, en poids de dialkyl-alkyl phosphonate,
b2) de20 à 60 %, de préférence de 25 à 40%, en poids d'un carbonate organique, et
b3) de 20 à 60 %, de préférence de 25 à 40%, en poids d'un sulfoxyde.

### Définitions

Dans la présente demande, on entend par "formulation phytosanitaire concentrée" une formulation destinée à être mélangée avec de l'eau (par exemple diluée) par l'utilisateur, par opposition à une composition phytosanitaire diluée.

Dans la présente demande, lorsque sont utilisées des plages de concentrations ou des proportions en % dans une composition ou une formulation, le total avec éventuellement d'autres ingrédients est de 100%.

Dans la présente demande, lorsque sont utilisées des plages de concentrations ou des proportions en g/L dans une composition ou une formulation, le total, avec éventuellement d'autres ingrédients est tel qu'il est conforme à la densité de la composition ou de la formulation (pour 1 L, le total est égal à la densité * 1000).

Dans la présente demande on entend par produit phytosanitaire solide un produit ayant un point de fusion supérieur à 25°C.

### Produit phytosanitaire actif a)

Le produit phytosanitaire actif est un azole, de préférence un triazole. Le triazole peut notamment être un composé différent du tebuconazole, ou, avantageusement, du tebuconazole.

Le tebuconazole est la dénomination usuelle d'un composé connu de l'homme du métier, dont la formule est la suivante:

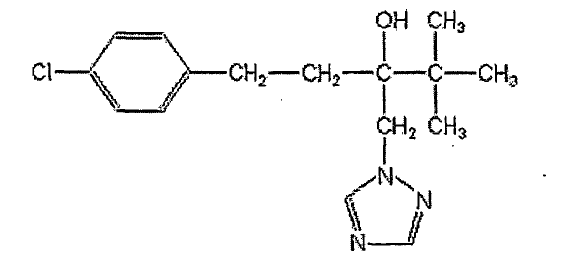

Le tebuconazle est un produit phytosanitaire solide.

A titre de triazoles différents du tebuconazole, on peut notamment citer les composés suivants:

Azaconazole; bitertanol; bromuconazole; cyproconazole; diclobutrazol; difenoconazole; diniconazole; diniconazole-M; epoxiconazole; etaconazole; fenbuconazole; fluotrimazole; fluquinconazole; flusilazole; flutriafol; furconazole; furconazole-cis; hexaconazole; imibenconazole; ipconazole; metconazole; myclobutanil; penconazole; prochloraz, propiconazole; prothioconazole; quinconazole; strobulurin et analogues, simeconazole; tetraconazole; triadimefon; triadimenol; triazbutil; triflumizole, triticonazole; uniconazole; uniconazole-P.

Selon un mode de réalisation, on utilise un azole, en particulier un triazole, notamment parmi ceux cités ci-dessus, solide.

### Solvant b) et mélange de solvants et composition solvante

La formulation phytosanitaire comprend au moins un solvant choisi parmi les dialkyl-alkylphosphonates.

Selon un mode de réalisation avantageux, le solvant b) est un mélange de solvant. Par mélange de solvant dans la formulation phytosanitaire concentrée (ou dans la composition diluée) on entend aussi bien un mélange opéré préalablement à l'introduction dans la formulation, qu'une association, où on mélange les solvants en réalisant la formulation, lors de la mise en présence avec le produit actif phytosanitaire.

L'invention concerne également une composition solvante, particulièrement utile comprenant un mélange de solvants. Dans la composition solvante, le mélange de solvant est entendu comme un mélange effectif (par opposition à une association), de préférence limpide.

Le solvant comprend un dialkyl-alkylphosphonate. Le dialkyl-alkylphosphonate comprend de préférence au moins 90% en poids d'un composé de formule

R¹ₐP(=O)(-OR²)_{b,}

dans laquelle
- a est un nombre moyen d'environ 1,
- b est un nombre moyen d'environ 2,
- a+b = 3,
- R¹ est un groupe alkyle, linéaire ou branché, comprenant de préférence de 1 à 12 atomes de carbone, et
- R² est un groupe alkyle, linéaire ou branché, comprenant de préférence de 1 à 12 atomes de carbone.
Le dialkyl-alkylphosphonate peut comprendre moins de 10%, de préférence moins de 95% d'impuretés comme des dialkylphosphates ou des trialkylphosphates.

Selon un mode avantageux, on met en oeuvre du DiButyl-ButylPhosphonate (DBBP). De préférence de le dialkyl-alkylphosphonate comprend au moins 90% en poids de DiButyl-ButylPhosphonate (DBBP). On peut par exemple utiliser le produit commercialisé par Rhodia sous la dénomination Albrite DBBP
Avantageusement, on met en oeuvre un mélange de solvants, ou la composition solvante, comprenant au moins:
b1) le dialkyl-alkyl phosphonate,
b2) un carbonate organique, et
b3) un sulfoxyde.
De préférence, le mélange de solvants ou la composition solvante comprend:
b1) de 20 à 60 %, de préférence de 25 à 40%, en poids de dialkyl-alkyl phosphonate,
b2) de20 à 60 %, de préférence de 25 à 40%, en poids d'un carbonate organique, et
b3) de 20 à 60 %, de préférence de 25 à 40%, en poids d'un sulfoxyde.

Le carbonate organique peut notamment être choisi parmi le carbonate propylène, le carbonate diméthylé, le carbonate diéthylé, le carbonate d'éthylène. On préfère tout particulièrement le carbonate de propylène ("4-methyl,1-3,dioxane-2-one"). Un tel composé est notamment commercialisé sous la dénomination Arconate pour Lyondell.

Le sulfoxyde peut notamment être choisi parmi le DiMéthylSulfOxyde (DMSO), et le Methylsulfoxyde.
Un mélange de solvants, ou une composition solvante, particulièrement avantageux comprend:
b1) de 25 à 40%, en poids de DiButylButylPhosphonate,
b2) de 25 à 40%, en poids de carbonate de propylène, et
b3) de 25 à 40%, en poids de DiMéthylSulfOxyde (DMSO).

On précise qu'en général la composition solvante ne comprend substantiellement pas d'eau (typiquement moins de 5% en poids, de préférence moins de 1% en poids), qu'elle ne comprend substantiellement pas de produit phytosanitaire actif (typiquement moins de 5% en poids, de préférence moins de 1% en poids). Il n'est pas exclu qu'elle comprennent d'autres solvants (différents de l'eau) et/ou au moins un tensioactif.

A titre d'autres solvants, minoritaires, qu'il est possible d'utiliser dans le mélange de solvant de la formulation phytosanitaire ou dans la composition solvante, on peut citer les esters de lactates, les dimethylamides d'acides carboxyliques, les esters d'acides gras, les coupes d'hydrocarbures, les amides cycliques, les lactones.

Sans vouloir être lié à une quelconque théorie, on pense que le sulfoxyde et/ou le carbonate de propylène aident à abaisser la viscosité des formulations comprenant le dialkyl-alkyl phosphonate. Le sulfoxide aide à éviter l'apparition de cristaux après une dilution avec de l'eau, mais favorise l'apparition de cristaux dans la formulation à basses températures. Le carbonate de propylène aide à éviter l'apparition de cristaux dans la formulation, mais favorise l'apparition de cristaux après une dilution avec de l'eau. Les proportions respectives des différents solvants peuvent être affinées à l'aide de ces indications, selon la viscosité recherchée, le produit phytosanitaire à solubiliser, et la stabilité (notamment l'absence de cristallisation) requise.

### Agent émulsifiant b)

La formulation phytosanitaire peut comprendre un agent émulsifiant, typiquement et de préférence un tensioactif. Les agents émulsifiants sont des agents destinés à faciliter la mise en émulsion ou la dispersion après mise en présence de la formulation avec de l'eau, et/ou à stabiliser (dans le temps et/ou en température) l'émulsion ou la dispersion, par exemple en évitant une sédimentation.
Les tensioactifs sont des composés connus, qui présentent une masse molaire généralement relativement faible, par exemple inférieure à 1000 g/mol. Le tensioactif peut être un tensioactif anionique sous forme salifiée ou acide, non ionique de préférence polyalcoxylé, cationique, amphotère (terme incluant aussi les tensioactifs zwitterioniques). Il peut s'agir d'un mélange ou d'une association de ces tensioactifs. Le tensioactif peut être un tensioactif comprenant un groupe aromatique (tensioactif aromatique) ou un tensioactif ne comprenant pas de groupe aromatique (tensioactif non aromatique). Il peut s'agir d'un mélange ou d'une association de ces tensioactifs. Dans
le cas de mélanges de tensioactifs, il peut s'agir d'un mélange comprenant au moins un tensioactif aromatique et au moins un tensioactif non aromatique, ou d'un mélange de plusieurs tensioactifs aromatique mais pas de tensioactif non aromatique, ou d'un mélange comprenant plusieurs tensioactifs non aromatiques mais pas de tensioactif non aromatique.
A titre d'exemples de tensioactifs anioniques, on peut citer, sans intention de s'y limiter:
- les acides alkylsulfoniques, les acides arylsulfoniques, éventuellement substitués par un ou plusieurs groupements hydrocarbonés, et dont la fonction acide est partiellement ou totalement salifiée, comme les acides alkylsulfoniques en C₈-C₅₀, plus particulièrement en C₈-C₃₀, de préférence en C₁₀-C₂₂, les acides benzènesulfoniques, les acides naphtalènesulfoniques, substitués par un à trois groupements alkyles en C₁-C₃₀, de préférence en C₄-C,₆, et/ou alcényles en C₂-C₃₀, de préférence en C₄-C₁₆.
- les mono- ou diesters d'acides alkylsulfosucciniques, dont la partie alkyle, linéaire ou ramifiée, éventuellement substituée par un ou plusieurs groupements hydroxylés et/ou alcoxylés, linéaires ou ramifiés en C₂-C₄ (de préférence éthoxylés, propoxylés, éthopropoxylés).
- les esters phosphates choisis plus particulièrement parmi ceux comprenant au moins un groupement hydrocarboné saturé, insaturé ou aromatique, linéaire ou ramifié, comprenant 8 à 40 atomes de carbone, de préférence 10 à 30, éventuellement substitués par au moins un groupement alcoxylé (éthoxylé, propoxylé, éthopropoxylé). En outre, ils comprennent au moins un groupe ester phosphate, mono- ou diestérifié de telle sorte que l'on puisse avoir un ou deux groupes acides libres ou partiellement ou totalement salifiés. Les esters phosphates préférés sont du type des mono- et diesters de l'acide phosphorique et de mono-, di- ou tristyrylphénol alcoxylé (éthoxylé et/ou propoxylé), ou de mono-, di- ou trialkylphénol alcoxylé (éthoxylé et/ou propoxylé), éventuellement substitué par un à quatre groupements alkyles ; de l'acide phosphorique et d'un alcool en C₈-C₃₀, de préférence en C₁₀-C₂₂ alcoxylé (éthoxylé ou éthopropoxylé); de l'acide phosphorique et d'un alcool en C₈-C₂₂, de préférence en C₁₀-C₂₂, non alcoxylé.
- les esters sulfates obtenus à partir d'alcools saturés, ou aromatiques, éventuellement substitués par un ou plusieurs groupements alcoxylés (éthoxylés, propoxylés, éthopropoxylés), et pour lesquels les fonctions sulfates se présentent sous la forme acide libre, ou partiellement ou totalement neutralisées. A titre d'exemple, on peut citer les esters sulfates obtenus plus particulièrement à partir d'alcools en C₈-C₂₀, saturés ou insaturés, pouvant comprendre 1 à 8 motifs alcoxylés (éthoxylés, propoxylés, éthopropoxylés) ; les esters sulfates obtenus à partir de phénol polyalcoxylé, substitués par 1 à 3 groupements hydroxycarbonés en C₂-C₃₀, saturés ou insaturés, et dans lesquels le nombre de motifs alcoxylés est compris entre 2 et 40 ; les esters sulfates obtenus à partir de mono-, di- ou tristyrylphénol polyalcoxylés dans lesquels le nombre de motifs alcoxylés varie de 2 à 40.

Les tensioactifs anioniques peuvent être sous forme acide (il sont potentiellement anioniques), ou sous une forme partiellement ou totalement salifiée, avec un contre-ion. Le contre-ion peut être un métal alcalin, tel que le sodium ou le potassium, un alcalino-terreux, tel que le calcium, ou encore un ion ammonium de formule N(R)₄⁺ dans laquelle R, identiques ou différents, représentent un atome d'hydrogène ou un radical alkyle en C₁-C₄ éventuellement substitué par un atome d'oxygène.

A titres d'exemples de tensioactifs non ioniques, on peut citer, sans intention de s'y limiter:
- les phénols polyalcoxylés (éthoxylés, propoxylés, éthopropoxylés) substitués par au moins un radical alkyle en C₄-C₂₀, de préférence en C₄-C₁₂, ou substitués par au moins un radical alkylaryle dont la partie alkyle est en C₁-C₆. Plus particulièrement, le nombre total de motifs alcoxylés est compris entre 2 et 100. A titre d'exemple, on peut citer les mono-, di- ou tri (phényléthyl) phénols polyalcoxylés, ou les nonylphénols polyalcoxylés. Parmi les di- ou tristyrylphenols éthoxylés et/ou propoxylés, sulfatés et/ou phosphatés, on peut citer, le di-(phényl-1 éthyl)phénol éthoxylé, contenant 10 motifs oxyéthylénés, le di-(phényl-1 éthyl)phénol éthoxylé, contenant 7 motifs oxyéthylénés, le di-(phényl-1 éthyl)phénol éthoxylé sulfaté, contenant 7 motifs oxyéthylénés, le tri-(phényl-1 éthyl)phénol éthoxylé, contenant 8 motifs oxyéthylénés, le tri-(phényl-1 éthyl)phénol éthoxylé, contenant 16 motifs oxyéthylénés, le tri-(phényl-1 éthyl)phénol éthoxylé sulfaté, contenant 16 motifs oxyéthylénés, le tri-(phényl-1 éthyl)phénol éthoxylé, contenant 20 motifs oxyéthylénés, le tri-(phényl-1 éthyl)phénol éthoxylé phosphaté, contenant 16 motifs oxyéthylénés.
- les alcools ou les acides gras en C₄-C₂₂ de préférence en C₆-C₂₂, éventuellement polyalcoxylés (éthoxylés, propoxylés, éthopropoxylés). Dans le cas où ils sont présents, le nombre des motifs alcoxylés est compris entre 1 et 60. Le terme acide gras éthoxylé inclut aussi bien les produits obtenus par éthoxylation d'un acide gras par l'oxyde d'éthylène que ceux obtenus par estérification d'un acide gras par un polyéthylèneglycol.
- les triglycérides polyalcoxylés (éthoxylés, propoxylés, éthopropoxylés) d'origine végétale ou animale. Ainsi conviennent les triglycérides issus du saindoux, du suif, de l'huile d'arachide, de l'huile de beurre, de l'huile de graine de coton, de l'huile de lin, de l'huile d'olive, de l'huile de palme, de l'huile de pépins de raisin, de l'huile de poisson, de l'huile de soja, de l'huile de ricin, de l'huile de colza, de l'huile de coprah, de l'huile de noix de coco, et comprenant un nombre total de motifs alcoxylés compris entre 1 et 60. Le terme triglycéride éthoxylé vise aussi bien les produits obtenus par éthoxylation d'un triglycéride par l'oxyde d'éthylène que ceux obtenus par trans-estérification d'un triglycéride par un polyéthylèneglycol.
- les esters de sorbitan polyalcoxylés (éthoxylés, propoxylés, éthopropoxylés), plus particulièrement les esters de sorbitol cyclisé d'acides gras de C₁₀ à C₂₀ comme l'acide laurique, l'acide stéarique ou l'acide oléique, et comprenant un nombre total de motifs alcoxylés compris entre 2 et 50.

De préférence le tensioactif c) comprend au moins 50% en poids d'un tensioactif di- ou tristyrylphenol éthoxylé et/ou propoxylé. Ces tensioactifs présentent une HLB relativement élevée. Il peut être avantageux de leur associer un tensioactif de HLB plus faible, par exemple un tensioactif non ionique de plus faible HLB. Une telle association peut aider à éviter une sédimentation.

### Formulation

La formulation, de préférence liquide, peut comprendre typiquement de 10 à 500 g/L, du produit phytosanitaire actif. Cette proportion peut être de 200 à 300 g/L, ou même inférieure, par exemple de 10 à 100 g/L ou de 100 à 200 g/L.

Selon un mode avantageux, la formulation comprend:
a) de 10 à 500 g/L, de préférence 200 à 300 g/L, du produit phytosanitaire, en poids de matière active,
b) de 150 à 800 g/L de solvant, de préférence de 600 à 700 g/L,
c) de 30 à 300 g/L de tensioactif, de préférence de 100 à 250 g/L, en poids de matière active (matière tensioactive, matière sèche), et
d) de 0 à 100 g/L d'eau,
le solvant b) étant un mélange de solvants comprenant au moins:
b1) de 20 à 60 %, de préférence de 25 à 40%, en poids de dialkyl-alkyl phosphonate,
b2) de20 à 60 %, de préférence de 25 à 40%, en poids d'un carbonate organique, et
b3) de 20 à 60 %, de préférence de 25 à 40%, en poids d'un sulfoxyde.
La formulation, concentrée, ne comprend pas des quantités importantes d'eau. Typiquement la teneur en eau est inférieure à 50% en poids, avantageusement inférieure à 25% en poids.

La formulation est de préférence un formulation liquide, par exemple sous forme d'un concentré emulsifiable (etc), d'une émulsion concentrée (EW) ou d'une micorémulsion (ME). Dans ce cas elle comprend de préférence moins de 500 g/L d'eau, plus préférablement moins de 250 g/L.

Il n'est pas exclu de réaliser des formulation solides, par exemple des formulations dans lesquelles un liquide comprenant le produit phytosanitaire solubilisé dans le solvant ou le mélange de solvant ou la composition solvante, est supporté par un minéral et/ou dispersé dans une matrice solide.

La formulation peut bien entendu comprendre d'autres ingrédients que le produit phytosanitaire actif, le(s) solvant(s), le(s) agent(s) émulsifiant(s) optionnel(s) et l'eau optionnelle. Elle peut notamment comprendre des agent de modification de la viscosité, des agents antimousse, notamment des antimousse siliconnés, des agents anti-rebond, des agents anti-lessivage, des charges inertes, notamment des charges minérales, des agents anti-gel...

### Procédé

Des procédés classiques de préparation de formulations phytosanitaires ou de mélanges de solvants peuvent être mis en oeuvre. On peut opérer par simple mélange des constituants.

Pour la réalisation des formulations phytosanitaires comprenant un mélange ou un association de solvants, on peut notamment introduire les différents solvants séparément. On peut également introduire un mélange de solvant préparé au préalable, typiquement la composition solvante.

La composition solvante peut être préparée par simple mélange des solvants.

### Utilisation de la formulation phytosanitaire

La formulation phytosanitaire concentrée est destinée à être répandue sur un champ cultivé ou à cultiver, par exemple un champ de soja, le plus souvent après dilution dans de l'eau, pour obtenir une composition diluée. La dilution est généralement opérée par l'exploitant agricole, directement dans un réservoir ("tank-mix"), par exemple dans le réservoir d'un dispositif destiné à répandre la composition. Il n'est pas exclu que l'exploitant ajoute d'autres produits phytosanitaires, par exemple des fongicides, herbicides, pesticides, insecticides, des fertilisants. Ainsi, la formulation peut être utilisée pour préparer une composition diluée dans l'eau du produit phytosanitaire actif, par mélange d'au moins une part en poids de formulation concentrée avec au moins 10 parts d'eau, de préférence moins de 1000 parts. Les taux de dilution et les quantités à appliquer sur le champ dépendent généralement du produit phytosanitaire et de la dose souhaitable pour traiter le champ; cela peut être déterminé par l'exploitant agricole.
D'autres détails ou avantages de l'invention apparaîtront au vu des exemples qui suivent sans caractère limitatif.

### EXEMPLES

On utilise les ingrédients suivants:
- DMSO
- Carbonate de Propylène
- Solvant A: association de
   - 36 % en poids de DMSO,
   - 32 % en poids de carbonate de propylène
   - 32 % en poids de DBBP (Albrite DBBP, Rhodia).
- Tebuconazole à 96,34% en matière active.
- Geronol TE 777, Rhodia: tensioactif comprenant plus de 50% en poids de tristyrylphénol ethopropoxylé.
- Alkamuls OR 36, Rhodia: huile de ricin éthoxylée.
- Antarox B 848, Rhodia: alcool éthopropoxylé
On prépare des formulations phytosanitaires par mélange des ingrédients, de manière à obtenir une concentration en tebuconazole de 250 g/L.

On effectue les tests suivants:
- pH: test CIPAC MT75
- Stabilité après dilution ("émulsification"): test CIPAC MT36, effectué à des concentrations après dilution de 2% et/ou 5%, à 30°C, avant et après stockage 14 jours à 54°C, avec des duretés en eau A (20 ppm), D (342 ppm), C (500 pm) ou 1000 ppm.
- Teste d'apparence de la formulation à 0°C ou à 54°C: test CIPAC MT39 (0°C) et MT 46 (54°C).

| | Exemple 1C | Exemple 2C | Exemple 3C | Exemple 4 |
|---|---|---|---|---|
| Teboconazole | 250 g/L | 250g/L | 250 gl/L | 250 g/L |
| (matière active) | | | | |
| DMSO Carbonate de propylène | pour volume | Pour volume | 20/80 en poids | |
| | | | DMSO/Carbonate | |
| | | | de propylène | |
| Solvant A | | | | Pour volume |
| Geronol TE 777 | | | | |
| Apparence 0°C | Cristaux | quelques cristaux | Pas de cristaux | Pas de cristaux |
| Emulsification | | | Nombreux | Pas de |
| (5%, 30°C) | | | cristaux | cristaux |

| | | | | |
|---|---|---|---|---|
| La lettre C indique qu'il s'agit d'un exemple comparatif | | | | |

### Exemple 5

On prépare la formulation suivante:

| | g/L |
|---|---|
| Tebuconazole | 250 (en matière active) |
| Solvant A | 633 |
| Eau | 25 |
| Geronol TE/777 | 180 |

La densité est de 1,098.

Le pH est de 7,2

| | A | D | C | 1000 ppm |
|---|---|---|---|---|
| Emulsification | OK | OK | OK | OK |
| 2%, 30°C, | | | | |
| après 2h | | | | |
| Emulsification | OK | OK | OK | OK |
| 5%, 30°C, | | | | |
| après 2h | | | | |
| Après 14 jours | OK | OK | OK | OK |
| à 54°C | | | | |
| Emulsification | | | | |
| 5%, 30°C, | | | | |
| après 2h | | | | |

- Apparence 0°C: solution claire, OK
- Apparence 54°C: solution claire, OK

Les formulations des exemples 4 et 5 présentent d'excellentes propriétés en ce qui concerne la non cristallisation, et sont particulièrement appréciées pour leur faible dangerosité et/ou faible toxicité.

### Exemple 6

On prépare la formulation suivante, ne comprenant pas de tensioactif aromatique:

| | g/L |
|---|---|
| Tebuconazole | 250 (en matière active) |
| Solvant A | 635 |
| Eau | 25 |
| Alkamuls OR 36 | 108 |
| Antarox B 848 | 72 |

La formulation de l'exemple 6 présente d'excellentes propriétés en ce qui concerne la non cristallisation, et est particulièrement appréciée pour sa faible dangerosité et/ou faible toxicité.

## Revendications

1. Formulation phytosanitaire concentrée comprenant
a) un produit phytosanitaire actif choisi parmi les azoles, de préférence les triazoles,
b) au moins un solvant,
c) éventuellement au moins agent émulsifiant, de préférence un tensioactif,
d) éventuellement de l'eau, et
**caractérisée en ce que** le solvant est un mélange de solvants comprenant au moins:
b1) le dialkyl-alkyl phosphonate,
b2) un carbonate organique, et
b3) un sulfoxyde.

2. Formulation selon la revendication 1, **caractérisée en ce que** le produit phytosanitaire actif est le tebuconazole.

3. Formulation selon l'une des revendications précédentes, **caractérisée en ce qu'**elle comprend:
a) de 10 à 500 g/L, de préférence 200 à 300 g/L, du produit phytosanitaire, en poids de matière active,
b) de 150 à 800 g/L de solvant, de préférence de 600 à 700 g/L,
c) de 30 à 300 g/L de tensioactif, de préférence de 100 à 250 g/L, en poids de matière active, et
d) de 0 à 100 g/L d'eau,
le solvant b) étant un mélange de solvants comprenant au moins:
b1) de 20 à 60 %, de préférence de 25 à 40%, en poids de dialkyl-alkyl phosphonate,
b2) de20 à 60 %, de préférence de 25 à 40%, en poids d'un carbonate organique, et
b3) de 20 à 60 %, de préférence de 25 à 40%, en poids d'un sulfoxyde.

4. Formulation selon l'une des revendications précédentes, **caractérisée en ce que** le carbonate organique est le carbonate de propylène.

5. Formulation selon l'une des revendications précédentes, **caractérisée en ce que** le sulfoxyde est le DiMéthylSulfOxyde (DMSO).

6. Formulation selon l'une des revendications précédentes, **caractérisé en ce que** le dialkyl-alkyl phosphonate comprend au moins 90% en poids de DiButylButylPhosphonate (DBBP).

7. Formulation selon l'une des revendications précédentes, **caractérisée en ce qu'**elle comprend un tensioactif c), le tensioactif étant choisi parmi les tensioactifs non ioniques, les tensioactifs anioniques, les tensioactifs amphotères, et leurs mélanges ou associations.

8. Formulation selon la revendication précédente, **caractérisée en ce que** le tensioactif c) comprend au moins 50% en poids d'un tensioactif di- ou tristyrylphenol éthoxylé et/ou propoxylé.

9. Formulation selon l'une des revendications précédentes, **caractérisée en ce qu'**elle est sous forme d'un concentré emulsifiable, d'une émulsion concentrée ou d'une microémulsion, comprenant moins de 500 g/L d'eau.

10. Utilisation de la formulation selon l'une des revendications précédentes pour préparer une composition diluée dans l'eau du produit phytosanitaire actif, par mélange d'au moins une part en poids de formulation concentrée avec au moins 10 parts d'eau, de préférence moins de 1000 parts.

11. Composition solvante comprenant un mélange de solvants, **caractérisée en ce qu'**elle comprend:
b1) de 20 à 60 %, de préférence de 25 à 40%, en poids de dialkyl-alkyl phosphonate,
b2) de20 à 60 %, de préférence de 25 à 40%, en poids d'un carbonate organique, et
b3) de 20 à 60 %, de préférence de 25 à 40%, en poids d'un sulfoxyde.

12. Composition solvante selon la revendication 11, **caractérisée en ce qu'**elle comprend:
b1) de 25 à 40%, en poids de DiButylButylPhosphonate,
b2) de 25 à 40%, en poids de carbonate de propylène, et
b3) de 25 à 40%, en poids de DiMéthylSulfOxyde (DMSO).

13. Composition solvante selon l'une des revendications 11 ou 12, **caractérisée en ce que**
- elle ne comprend substantiellement pas d'eau,
- elle ne comprend substantiellement pas de produit phytosanitaire actif, et
- elle comprend éventuellement d'autres solvants et/ou au moins un tensioactif.

## Claims

1. A concentrated plant-protection formulation comprising:
a) an active plant-protection product selected from azoles, preferably triazoles,
b) at least one solvent,
c) optionally, at least one emulsifier, preferably a surfactant,
d) optionally, water, and
**characterized in that** solvent b) is a mixture of solvents comprising at least:
b1) the dialkyl alkyl phosphonate,
b2) an organic carbonate, and
b3) a sulfoxide.

2. The formulation as claimed in claim 1, **characterized in that** the active plant-protection product is tebuconazole.

3. The formulation as claimed in one of the preceding claims, **characterized in that** it comprises:
a) from 10 to 500 g/l and preferably 200 to 300 g/l of the plant-protection product, by weight of active material,
b) from 150 to 800 g/l of solvent, and preferably from 600 to 700 g/l,
c) from 30 to 300 g/l of surfactant, and preferably from 100 to 250 g/l, by weight of active material, and
d) from 0 to 100 g/l of water,
the solvent b) being a mixture of solvents comprising at least:
b1) from 20% to 60%, preferably from 25% to 40%, by weight of dialkyl alkyl phosphonate,
b2) from 20% to 60%, preferably from 25% to 40%, by weight of an organic carbonate, and
b3) from 20% to 60%, preferably from 25% to 40%, by weight of a sulfoxide.

4. The formulation as claimed inone of the preceding claims, **characterized in that** the organic carbonate is propylene carbonate.

5. The formulation as claimed in one of the preceding claims, **characterized in that** the sulfoxide is dimethyl sulfoxide (DMSO).

6. The formulation as claimed in one of the preceding claims, **characterized in that** the dialkyl alkyl phosphonate comprises at least 90% by weight of dibutyl butyl phosphonate (DBBP).

7. The formulation as claimed in one of the preceding claims, **characterized in that** it comprises a surfactant c), the surfactant being selected from nonionic surfactants, anionic surfactants and amphoteric surfactants, and mixtures or combinations thereof.

8. The formulation as claimed in the preceding claim, **characterized in that** the surfactant c) comprises at least 50% by weight of an ethoxylated and/or propoxylated di- or tristyrylphenol surfactant.

9. The formulation as claimed in one of the preceding claims, **characterized in that** it is in the form of an emulsifiable concentrate, an emulsion in water or a microemulsion, comprising less than 500 g/l of water.

10. The use of the formulation as claimed in one of the preceding claims, for preparing a composition of the active plant-protection product, diluted in water, by mixing at least one part by weight of concentrated formulation with at least 10 parts of water, preferably less than 1000 parts.

11. A solvent composition comprising a mixture of solvents, **characterized in that** it comprises:
b1) from 20% to 60%, preferably from 25% to 40%, by weight of dialkyl alkyl phosphonate,
b2) from 20% to 60%, preferably from 25% to 40%, by weight of an organic carbonate, and
b3) from 20% to 60%, preferably from 25% to 40%, by weight of a sulfoxide.

12. The solvent composition as claimed in claim 11, **characterized in that** it comprises:
b1) from 25% to 40% by weight of dibutyl butyl phosphonate,
b2) from 25% to 40% by weight of propylene carbonate, and
b3) from 25% to 40% by weight of dimethyl sulfoxide (DMSO).

13. The solvent composition as claimed in either of claims 11 and 12, **characterized in that**:
- it comprises substantially no water,
- it comprises substantially no active plant-protection product, and
- it optionally comprises other solvents and/or at least one surfactant.

## Patentansprüche

1. Konzentrierte phytosanitäre Formulierung, welche aufweist:
a) ein phytosanitäres Wirkstoffprodukt, ausgewählt aus den Azolen, vorzugsweise den Triazolen,
b) wenigstens ein Lösungsmittel,
c) gegebenenfalls wenigstens einen Emulgator, vorzugsweise ein Tensid,
d) gegebenenfalls Wasser, und
**dadurch gekennzeichnet, dass** das Lösungsmittel b) ein Gemisch aus Lösungsmitteln ist, welches wenigstens aufweist:
b1) Dialkylalkylphosphonat,
b2) ein organisches Carbonat und
b3) ein Sulfoxid.

2. Formulierung gemäß Anspruch 1, **dadurch gekennzeichnet, dass** das phytosanitäre Wirkstoffprodukt Tebuconazol ist.

3. Formulierung gemäß einem der vorausgegangenen Ansprüche, **dadurch gekennzeichnet, dass** sie aufweist:
a) 10 bis 500 g/l, vorzugsweise 200 bis 300 g/l, als Gewicht Wirkstoff des phytosanitären Produkts,
b) 150 bis 800 g/l Lösungsmittel, vorzugsweise 600 bis 700 g/l,
c) 30 bis 300 g/l Tensid, vorzusgweise 100 bis 250 g/l, als Gewicht Wirkstoff, und
d) 0 bis 100 g/l Wasser,
wobei das Lösungsmittel b) ein Gemisch aus Lösungsmitteln ist, welches wenigstens aufweist:
b1) 20 bis 60 Gew.-%, vorzugsweise 25 bis 40 Gew.-%, Dialkylalkylphosphonat,
b2) 20 bis 60 Gew.-%, vorzugsweise 25 bis 40 Gew.-%, eines organischen Carbonats, und
b3) 20 bis 60 Gew.-%, vorzugsweise 25 bis 40 Gew.-%, eines Sulfoxids.

4. Formulierung gemäß einem der vorausgegangenen Ansprüche, **dadurch gekennzeichnet, dass** das organische Carbonat Propylencarbonat ist.

5. Formulierung gemäß einem der vorausgegangenen Ansprüche, **dadurch gekennzeichnet, dass** das Sulfoxid Dimethylsulfoxid (DMSO) ist.

6. Formulierung gemäß einem der vorausgegangenen Ansprüche, **dadurch gekennzeichnet, dass** das Dialkylalkylphosphonat wenigstens 90 Gew.-% Dibutylbutylphosphonat (DBBP) aufweist.

7. Formulierung gemäß einem der vorausgegangenen Ansprüche, **dadurch gekennzeichnet, dass** sie ein Tensid c) aufweist, wobei das Tensid aus den nicht-ionischen Tensiden, den anionischen Tensiden, den amphoteren Tensiden und deren Gemischen oder Assoziationen gewählt ist.

8. Formulierung gemäß dem vorausgegangenen Anspruch, **dadurch gekennzeichnet, dass** das Tensid c) wenigstens 50 Gew.-% des Tensids ethoxyliertes und/oder propoxyliertes Di- oder Tristyrylphenol aufweist.

9. Formulierung gemäß einem der vorausgegangenen Ansprüche, **dadurch gekennzeichnet, dass** sie in Form eines emulgierbaren Konzentrats, einer konzentrierten Emulsion oder einer Mikroemulsion, die wenigstens 500 g/l Wasser umfasst, vorliegt.

10. Verwendung der Formulierung gemäß einem der vorausgegangenen Ansprüche für die Herstellung einer in Wasser verdünnten Zusammensetzung des phytosanitären Wirkstoffprodukts durch Mischen wenigstens eines Gewichtsteils der konzentrierten Formulierung mit wenigstens 10 Teilen Wasser, vorzugsweise weniger als 1000 Teilen.

11. Lösungsmittelzusammensetzung, die ein Gemisch aus Lösungsmitteln umfasst, **dadurch gekennzeichnet, dass** sie aufweist:
b1) 20 bis 60 Gew.-%, vorzugsweise 25 bis 40 Gew.-%, Dialkylalkylphosphonat,
b2) 20 bis 60 Gew.-%, vorzugsweise 25 bis 40 Gew.-%, eines organischen Carbonats, und
b3) 20 bis 60 Gew.-%, vorzugsweise 25 bis 40 Gew.-%, eines Sulfoxids.

12. Lösungsmittelzusammensetzung gemäß Anspruch 11, **dadurch gekennzeichnet, dass** sie aufweist:
b1) 25 bis 40 Gew.-% Dibutylbutylphosphonat,
b2) 25 bis 40 Gew.-% Propylencarbonat, und
b3) 25 bis 40 Gew.-% Dimethylsulfoxid (DMSO).

13. Lösungsmittelzusammensetzung gemäß einem der Ansprüche 11 oder 12, **dadurch gekennzeichnet, dass**
- sie im Wesentlichen kein Wasser aufweist,
- sie im Wesentlichen kein phytosanitäres Wirkstoffprodukt aufweist, und
- sie gegebenenfalls andere Lösungsmittel und/oder wenigstens ein Tensid aufweist.
